# EUROPEAN PATENT SPECIFICATION

(11) **EP 2 023 316 B1**
(45) Date of publication and mention of the grant of the patent: **13.10.2010**
(21) Application number: 08101988.7
(22) Date of filing: 26.02.2008
(51) Int. Cl.: G09G 3/22

(54) **Light emission device, display using the light emission device, and method of driving the light emission device.**
Lichtemissionsvorrichtung, Display mit der Lichtemissionsvorrichtung und Verfahren zum Antrieb der Lichtemissionsvorrichtung
Dispositif luminescent, affichage utilisant le dispositif luminescent et procédé pour la commande du dispositif luminescent

(30) Priority: 03.08.2007 KR 20070078066
(43) Date of publication of application: 11.02.2009
(73) Proprietor: Samsung SDI Co., Ltd., Suwon-si Gyeonggi-do (KR)
(72) Inventor: Cho, Duck-Gu Legal & IP Team, Samsung SDI Co., LTD.,, Suwon-si, Gyeonggi-do (KR); Lee, Sang-Jin Legal & IP Team, Samsung SDI Co., LTD.,, Suwon-si, Gyeonggi-do (KR); Lee, Ji-Won Legal & IP Team, Samsung SDI Co., LTD.,, Suwon-si, Gyeonggi-do (KR)
(74) Representative: Hengelhaupt, Jürgen

(56) References cited:
- US-A- 5 225 820
- US-A- 5 754 148
- US-A- 5 844 531
- US-A1- 2002 130 830
- US-A1- 2005 237 293
- US-A1- 2006 139 300

## Description

### BACKGROUND OF THE INVENTION

### 1. Field of the Invention

The present invention relates to a light emission device, a display using the light emission device, a method of driving the light emission device, and a method of driving the display.

### 2. Description of the Related Art

A liquid crystal display (LCD) that is one of flat panel displays is configured to display an image by varying light transmittance of each pixel using a dielectric anisotropy property of liquid crystal molecules by varying a twisting angle of each of the molecules in accordance with a voltage applied. The LCD has advantages in that it is lightweight and slim and operates with relatively low power consumption as compared with a cathode ray tube that is a conventional image display.

The LCD includes a liquid crystal panel assembly and a light emission device that is disposed in the rear part of the liquid crystal panel assembly to emit light toward the liquid crystal panel assembly.

When the liquid crystal panel assembly is an active type, the liquid crystal panel assembly includes a pair of transparent substrates, a liquid crystal layer disposed between the transparent substrates, polarizing plates disposed on outer surfaces of the transparent substrates, a common electrode provided on an inner surface of one of the transparent substrates, pixel electrodes and switching devices that are provided on an inner surface of the other transparent substrates, and a color filter providing red, green, and blue colors to three subpixels forming one pixel.

The liquid crystal panel assembly receives light emitted from the light emission device and transmits or intercepts the light in accordance with a twisting angle of each of the liquid crystal molecules of the liquid crystal layer to realize an image that may be predetermined.

A light emission device may be classified into different devices according to the type of the light source used by the light emission device. Among the different devices, a cold cathode fluorescent lamp (CCFL) type is well known. Since the CCFL is a line light source, a variety of optical members such as a diffuser sheet, a diffuser plate, and a prism sheet are used to uniformly diffuse light emitted from the CCFL toward a liquid crystal panel assembly.

However, since the light emitted from the CCFL passes through the optical members, there may be significant light loss. In an LCD using the CCFL as the light source, an amount of the light passing through the liquid crystal panel assembly is about 3-5% of the light emitted from the CCFL. Furthermore, the CCFL consumes a lot of power. That is, the power consumption of the CCFL takes a significant share of the overall power consumption of the LCD. In addition, the LCD using the CCFL cannot be large-sized due to the structural limitation of the CCFL. Therefore, it is difficult to apply the CCFL as the light source to LCD over 30-inch in size.

In order to avoid the problems of using the CCFL type light emission device in LCD, a light emitting diode (LED) type light emission device has been recently proposed. The LED type light emission device includes a plurality of LEDs that are a point light source, a reflecting sheet, a light guide plate, a diffuser sheet, a diffuser plate, and a prism sheet. The LED type light emission device has a fast response speed and an excellent color reproducibility. However, the LED type light emission device is expensive and physically thick.

As described above, typical light emission devices having different light sources have their own problems. Further, typical light emission device must be in an on-state with constant brightness when the LCD is driven, and thus, it is difficult to improve the image quality of the LCD using conventional light emission devices.

For example, when the liquid crystal panel assembly displays an image having dark and bright portions in accordance with video signals, a dynamic contrast can be significantly improved if the light emission device emits lights having different intensities to the dark and bright portions of the image.

When light emission data signals are transmitted to all of the light emission pixels of the light emission device, it causes the sudden generation of a peak current. The suddenly generated peak current makes it difficult to provide stability and selection of a device when a power source circuit is developed.

US Patent document US5225820 - see Fig. 6 - discloses an electron emission device which uses separated anode electrodes 26 (being covered with different colours 28, 29, 30) wherein the separated anode electrodes 26 are sequentially driven such that electrons emitted from (all) electron emission regions are sequentially attracted to electrodes 26 thereby sequentially generating light of different colours.

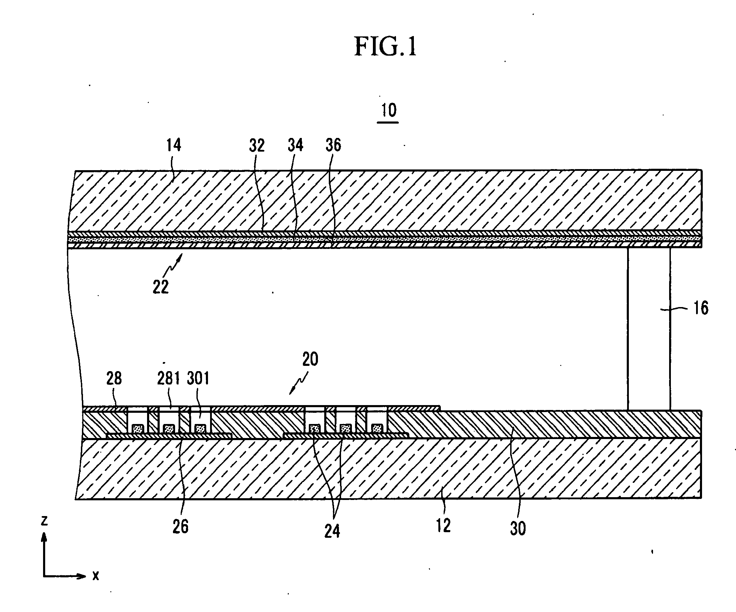

Obviously, the arrangement of US5225820 cannot reduce a peak current because a voltage difference between a scan-on voltage applied to the gates 16 and light emission data signal voltages applied to the cathodes 12 are not reduced by a time-division method but only the voltages applied to the anode are time-divided. The advantage of the device of US5225820 is that the necessity of a precise alignment of front substrate 10 and rear substrate 22 (see Fig. 1-3) can be avoided, however, the device is disadvantageous in that very high anode voltages need to be switched and a high peak current is generated which can deteriorate stability and selection of the device when a power source circuit is developed.

The above information disclosed in this Background section is only for enhancement of understanding of the background of the invention, and therefore, it may contain information that does not form the prior art that is already known in this country to a person of ordinary skill in the art.

### SUMMARY OF THE INVENTION

In an exemplary embodiment of the present invention, a light emission device is provided. The light emission device includes a substrate, a plurality of scan lines extending in a first direction on the substrate for transmitting a plurality of scan signals, a plurality of column lines extending in a second direction on the substrate for transmitting a plurality of light emission data signals, and a plurality of light emission pixels at crossings of the scan and column lines. The light emission pixels are coupled to the scan lines and column lines. Corresponding pixels of the plurality of the light emission pixels coupled to a common scan line of the plurality of scan lines are classified into at least a first pixel group and a second group. A timing of a first period for which a first light emission data signal is transmitted to the first pixel group is different from a timing of a second period for which a second light emission data signal is transmitted to the second pixel group. The first and second periods may be within a period for which the scan signals are transmitted to the scan lines, and the first period may be in advance of the second period. The light emission device may further include a light emission control unit for generating a light emission control signal and controlling transmission of the first light emission data signal to the first pixel group for the first period and transmission of the second light emission data signal to the second pixel group for the second period. The light emission device may further include a column driver for generating a plurality of light emission data signals including the first light emission data signal and the second light emission data signal. Here, the column driver may be configured to transmit the first light emission data signal to the first pixel group by synchronizing with the light emission control signal and transmit the second light emission data signal to the second pixel group by synchronizing with the light emission control signal. At this point, the light emission control signal may include at least two pulses for the period for which the scan signals are transmitted to the scan lines, and the at least pulses may correspond to the first and second pixel groups.

In another exemplary embodiment of the present invention, a display is provide. The display includes a display panel including a first substrate, a plurality of gate lines extending in a first direction on the first substrate for transmitting a plurality of gate signals, a plurality of data lines extending in a second direction on the first substrate for transmitting a plurality of data signals, and a plurality of display pixels at crossings of the gate and data lines; and a light emission device including a second substrate, a plurality of scan lines extending along one of the first and second directions on the second substrate for transmitting a plurality of scan signals, a plurality of column lines extending along the other one of the first and second directions on the second substrate for transmitting a plurality of light emission data signals, and a plurality of light emission pixels at crossings of the scan and column lines. The light emission device provides light to the display panel for displaying an image. Corresponding pixels of the plurality of light emission pixels coupled to a common scan line of the plurality of scan lines are grouped into at least a first pixel group and a second pixel group. A timing of a first period for which a first light emission data signal is transmitted to the first pixel group is different from a timing of a second period for which a second light emission data signal is transmitted to the second pixel group. At this point, the first and second periods may be within a period for which the scan signals are transmitted to the scan lines and the first period may be in advance of the second period. Preferably, the number of the light emission pixels is less than or equal to the number of the display pixels, and the light emission pixels emit light in response to gray levels of corresponding display pixels.

In still another exemplary embodiment of the present invention, a method of driving a light emission device is provided. The light emission device includes a substrate, a plurality of scan lines extending in a first direction on the substrate for transmitting a plurality of scan signals, a plurality of column lines extending in a second direction on the substrate for transmitting a plurality of light emission data signals, and a plurality of light emission pixels at crossings of the scan and column lines. The method includes setting a scan-on-time for which the scan signals are transmitted to a first scan line of the plurality of scan lines, classifying emission pixels of the light emission pixels coupled to the first scan line into at least first and second groups, transmitting the scan signals to the first scan line for the scan-on-time, transmitting first light emission data signals of the plurality of light emission data signals to the first group for a first period, and transmitting second light emission data signals of the plurality of light emission data signals to the second group for a second period. At this point, the first and second periods may be within a period for which the scan signals are transmitted to the scan lines, and the first period may be in advance of the second period. Further, a timing of the first period for which the first light emission data signals are transmitted to the first group may be different from a timing of the second period for which the second light emission data signals are transmitted to the second group. At this point, the setting the scan-on-time may include setting light emission control signal for transmitting the first light emission data signals to the first group and for transmitting the second light emission data signals to the second group. Here, the light emission control signal may include at least two pulses for a period for which the scan signals are transmitted to the scan lines, and the at least two pulses correspond to the first and second groups.

In still a further exemplary embodiment, a method of driving a display is provided. The display includes a display panel having a first substrate, a plurality of gate lines extending in a first direction on the first substrate for transmitting a plurality of gate signals, a plurality of data lines extending in a second direction on the first substrate for transmitting a plurality of data signals, and a plurality of display pixels at crossings of the gate lines and the data lines; and a light emission device having a second substrate, a plurality of scan lines extending in a third direction on the second substrate for transmitting a plurality of scan signals, a plurality of column lines extending in a fourth direction on the second substrate for transmitting a plurality of light emission data signals, and a plurality of light emission pixels at crossings of the scan lines and the column lines. The method includes setting a scan-on-time in which the scan signals are transmitted to a first scan line of the plurality of scan lines, classifying emission pixels of the light emission pixels coupled to the first scan line into at least a first group and a second group, transmitting the scan signals to the first scan line in the scan-on-time, transmitting first light emission data signals of the plurality of light emission data signals to the first group for a first period, and transmitting second light emission data signals of the plurality of light emission data signals to the second group for a second period. The first group and the second group are sequentially driven. The first period and the second period may be within the scan-on-time. The setting the scan-on-time may include setting light emission control signals for transmitting the first light emission data signals to the first group and for transmitting the second light emission data signals to the second group. The light emission control signal may include at least two pulses within the scan-on-time corresponding to the first group and the second group.

### BRIEF DESCRIPTION OF THE DRAWINGS

FIG. 1 is a partial sectional view of a first example of light emission device according to the present invention.
FIG. 2 is a partial sectional view of a second example of light emission device according to the present invention.
FIG. 3 is a partial exploded perspective view of an active area of a variation of the light emission device of FIG. 2, further comprising a focusing electrode.
FIG. 4 is a block diagram of a light emission device according to the present invention.
FIG. 5 is a timing diagram illustrating a driving timing of the light emission device of FIG. 4 according to a first exemplary embodiment of the present invention.
FIG. 6 is a schematic view of a portion of a light emission unit of the light emission device of FIG. 4 according to the first exemplary embodiment of the present invention.
FIG. 7 is a flowchart illustrating a process for reducing a peak current that is suddenly generated in the light emission device according to the first exemplary embodiment of the present invention.
FIG. 8 is a diagram of a driving timing of a light emission device according to a second exemplary embodiment of the present invention.
FIG. 9 is a schematic view of a portion of a light emission unit of the light emission device according to the second exemplary embodiment of the present invention.
FIG. 10 is a flowchart illustrating a process for reducing a peak current that is suddenly generated in the light emission device according to the second exemplary embodiment of the present invention.
FIG. 11 is a partial exploded perspective view of an active area of a light emission device used as a light source according to an exemplary embodiment of the present invention.
FIG. 12 is an exploded perspective view of a display, which uses the light emission device of FIG. 11 as a light source.
FIG. 13 is a block diagram of the display of FIG. 12.

### DETAILED DESCRIPTION OF THE EMBODIMENTS

Embodiments of the present invention have been made to provide a light emission device that can reduce a peak current, which is suddenly generated, by sequentially transmitting the light emission data signals to the light emission pixels using a time-division method. Embodiments of the present invention further provides a display using the light emission device, a method of driving the light emission device, and a method of driving the display.

Throughout this specification and the claims that follow, when it is described that a first member is connected to a second member, this means that the first member is directly or indirectly connected to the second member. That is, a third member may be interposed between the first and second members. Further, when it is described that a unit "includes" a constituent element, it means that the unit may further include other constituent elements in addition to the element unless specifically referred to the contrary.

FIG. 1 is a partial sectional view of a first example of a light emission device according to the present invention.

Referring to FIG. 1, a light emission device 10 includes a vacuum vessel having first and second substrates 12 and 14 and a sealing member 16 provided between the first and second substrates 12 and 14 along edge portions thereof to seal together the first and second substrates 12 and 14. The interior of the vacuum vessel is kept to a degree of vacuum of about 1.33·10⁻⁴ Pa (10⁻⁶ Torr).

The first and second substrates 12 and 14 may be divided into an active area which is surrounded by the sealing member 16 and at which visible light is substantially emitted and an inactive area surrounding the active area. An electron emission unit 20 for emitting electrons is located on an inner surface of the first substrate 12 at the active area on the inner surface, and a light emission unit 22 is located on an inner surface of the second substrate 14 at the active area.

The second substrate 14 on which the light emission unit 22 is located may be a front substrate of the light emission device 10, and the first substrate 12 on which the electron emission unit 20 is located may be a rear substrate of the light emission device 10.

The electron emission unit 20 includes electron emission regions 24 and driving electrodes 26 and 28 for controlling an amount of electrons emitted from each of the electron emission regions 24. The driving electrodes 26 may be cathode electrodes, and the driving electrodes 28 may be gate electrodes crossing the cathode electrodes 26 with an insulation layer 30 interposed therebetween.

First openings 281 are formed in the gate electrodes 28 and second openings 301 are formed in the insulating layer 30. The first and second openings 281 and 301 are formed at intersecting regions of the cathode and gate electrodes 26 and 28, thereby partly exposing surfaces of the cathode electrodes 26.

The electron emission regions 24 are formed of a material that can emit electrons when electric field is applied under a vacuum. For example, the electron emission regions 24 may be formed of a carbon-based material or a nanometer-sized material (i.e. having a size in the range from 1 nm to 1000 nm). For example, the electron emission regions 24 may be formed of a material selected from one of carbon nanotubes, graphite, graphite nanofibers, diamond, diamond-like carbon, fullerene (C₆₀), silicon nanowires, or a combination thereof.

Alternatively, the electron emission regions 24 may be formed into a structure having a sharp tip from a material such as molybdenum (Mo) or silicon (Si).

In the above-described structure, one crossing region of the cathode and gate electrodes 26 and 28 may correspond to one pixel area of the light emission device 10. Alternatively, two or more crossing regions of the cathode and gate electrodes 26 and 28 may correspond to one pixel area of the light emission device 10.

Next, the light emission unit 22 further includes an anode electrode 32, a phosphor layer 34 formed on a surface of the anode electrode 32, and a metal reflective layer 36 covering the phosphor layer 34. The anode electrode 32 is applied with an anode voltage from a power source located outside of the vacuum vessel to maintain the phosphor layer 34 in a high potential state. The anode electrode 32 is formed of a transparent conductive material such as indium tin oxide (ITO) to allow the visible light emitted from the phosphor layer 34 to pass therethrough.

The metal reflective layer 36 may be formed of aluminum and has a thickness of thousands A and be provided with fine holes through which the electron beams pass. The metal reflective layer 36 reflects the visible light, which is emitted from the phosphor layer 34 toward the first substrate 12, back to the second substrate 14 to enhance the luminance of a light emission surface. In another embodiment, the anode electrode 32 may be eliminated, and the metal reflective layer 36 may be configured to function as the anode electrode by being applied with the anode voltage.

A plurality of spacers (not shown) are located at the active area between the first and second substrates 12 and 14 to provide support against compression force applied to the vacuum vessel and maintain a uniform gap between the first and second substrates 12 and 14.

The above-described light emission device 10 is driven by applying a driving voltage that may be predetermined to the cathode electrode 26 and the gate electrode 28 and applying thousand or more volts of a positive direct voltage (anode voltage) to the anode electrode 32. That is, one of the cathode and gate electrodes 26 and 28 is applied with a scan driving voltage, and the other is applied with a data driving voltage.

Then, electric field is formed around the electron emission regions 24 at pixels where a voltage difference between the cathode and gate electrodes 26 and 28 is higher than a threshold value, and thus, electrons are emitted from the electron emission regions 24. The electrons emitted from the electron emission regions 24 collide with the phosphor layer 34 by being attracted by the anode voltage at the anode electrode. The light emission intensity of the phosphor layer 34 of each pixel is proportional to the amount of electrons emitted from the electron emission region 24 of the corresponding pixel.

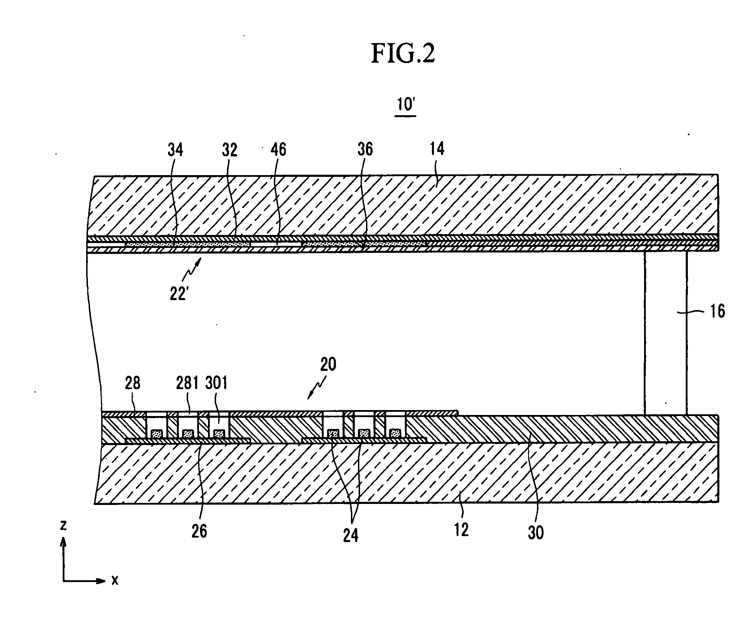

FIG. 2 is a sectional view of a second example of a light emission device according to the present invention.

Referring to FIG. 2, a light emission device 10' is substantially identical to the light emission device 10 of FIG. 1 except for a light emission unit 22' that further includes a dark colored layer 46. InFIGs. 1 and 2, like reference numerals designate like elements.

In this exemplary embodiment, the phosphor layer 34 is divided into a plurality of sections spaced apart from each other, and the black layer 46 is formed between the sections of the phosphor layer 34. The dark colored layer 46 may be formed of chromium. In another exemplary embodiment, the anode electrode 32 may be omitted, and the metal reflective layer 36 functions as the anode electrode by being applied with the anode voltage.

The light emission devices 10, 10' (shown in FIGs. 1 and 2) may be used as a light source for emitting white light to a passive-type display panel (non-emissive type display panel) or may be used as a display itself by forming red, green, and blue phosphor layers.

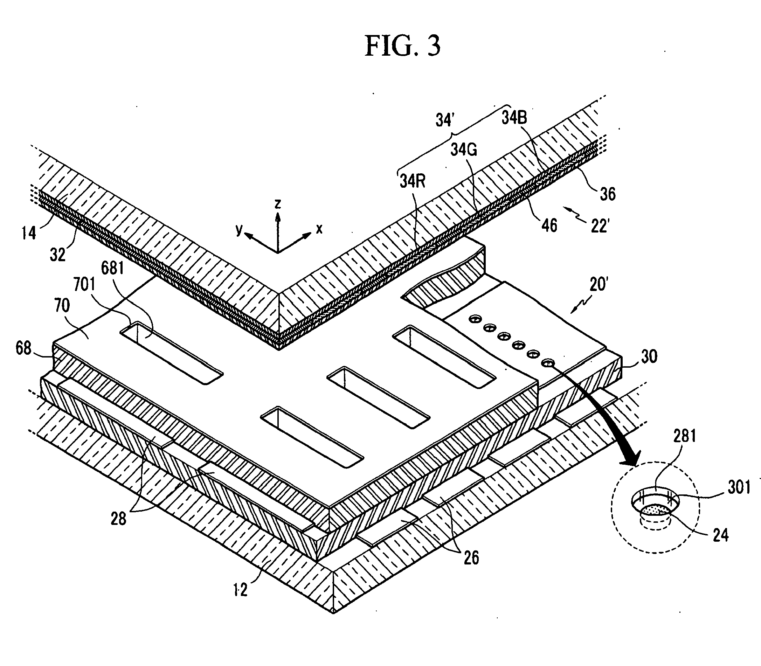

FIG. 3 is an exploded perspective view illustrating an active area of a variation of the self-emissive light emission device 10' of FIG. 2, further comprising a focusing electrode 70.

Referring to FIG. 3, in the self-emissive light emission device 10', the electron emission unit 20' includes cathode electrodes 26, gate electrodes 28, and electron emission regions 24 electrically connected to the cathode electrodes 26. A first insulation layer 30 is disposed between the cathode electrodes 26 and the gate electrodes 28, and a second insulation layer 68 is formed on the gate electrodes 28. A focusing electrode 70 is formed on the second insulation layer 68.

First openings 681 and second openings 701 are respectively formed in the second insulation layer 68 and the focusing electrode 70 to allow electron beams to pass therethrough. The focusing electrode 70 is applied with 0V or several to tens of volts of a negative direct voltage to converge the electrons passing through the second openings 701 formed in the focusing electrode 70.

The light emission unit 22' includes an anode electrode 32; phosphor layers 34' formed on a surface of the anode electrode 32 and having red, green, and blue phosphor layers 34R, 34G, and 34B spaced apart from each other; a dark colored layer 46 formed between the phosphor layers 34'; and a metal reflective layer 36 covering the phosphor layers 34' and the dark colored layer 46.

One crossing region of the cathode and gate electrodes 26 and 28 may correspond to one subpixel; and each of the red, green, and blue phosphor layers 34R, 34G, and 34B are located to correspond to one subpixel. Three subpixels that respectively correspond to one red phosphor layer 34R, one green phosphor layer 34G, and one blue phosphor layer 34B, are arranged along a line direction forming one pixel.

The amount of electrons emitted from each of the electron emission regions 24 of the respective subpixels are determined by a driving voltage applied to the cathode and gate electrodes 26 and 28. The electrons emitted collide with the phosphor layer 34' of the corresponding subpixel, thereby exciting the phosphor layer 34'. By the above-described process, the light emission device according to the embodiments controls the luminance and light emission color of each pixel, thereby realizing a color image.

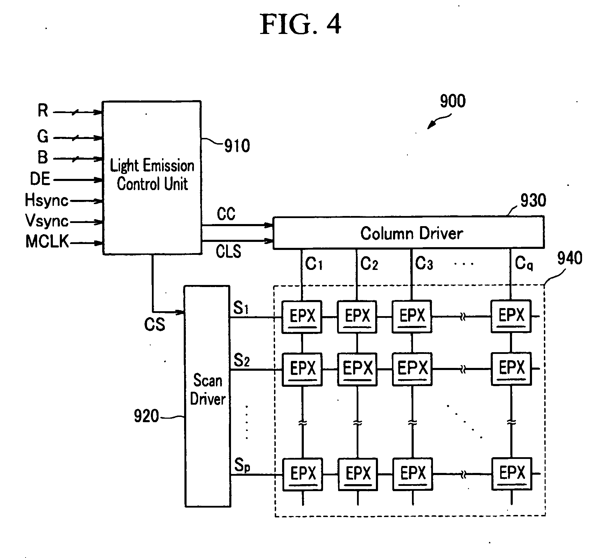

The following will describe the light emission device 10' of FIG: 2 and a method of driving the light emission device 10' with reference to FIG. 4. The method may also be applied to the light emission device 10 shown in FIG. 1.

FIG. 4 is a block diagram of a light emission device according to an embodiment of the present invention.

Referring to FIG. 4, a light emission device 900 according to the present invention includes the anode electrode 32 (shown in FIG. 2), a light emission control unit 910, a scan driver 920, a column driver 930, a light emission unit 940, and an anode driver (not shown).

In an exemplary embodiment of the present invention, the gate electrodes 28 of light emission pixels EPX function as scan lines S1-Sp , and the cathode electrodes 26 of the light emission pixels EPX function as column lines C1-Cq and are connected to the electron emission regions 24 (shown in FIG. 2).

Input video signals R, G, and B have luminance information of each of the light emission pixels EPX. The luminance has a grayscale of, for example, 1024(=2¹⁰), 256(=2⁸), or 64(=2⁶). A vertical synchronization signal Vsync, a horizontal synchronization signal Hsync, a main clock MCLK, and a data enable signal DE may be provided as input control signals.

The scan driver 920 is connected to the scan lines S1-Sp to transmit a plurality of scan signals so that the light emission pixels EPX can emit light in response to the scan driving signal CS.

The column driver 930 is connected to the column lines C1-Cq to allow the light emission pixels EPX to emit light in response to a light emission control signal CC and a light emission signal CLS. In more detail, the column driver 930 generates a plurality of light emission data signals in response to the light emission signal CLS and transmits the light emission data signals to the column lines C1-Cq in response to the light emission control signal CC. In the light emission device 900 the light emission data signals have voltage levels corresponding to gray levels that can be predetermined matching with an image that is being displayed.

The light emission unit 940 includes the plurality of scan lines S1-Sp for transmitting the scan signals, the plurality of column lines C1-Cq, and the plurality of light emission pixels EPX. The light emission pixels EPX are located on crossing regions of the scan lines S1-Sp and the column lines C1-Cq. The scan lines S1-Sp are connected to the scan driver 920, and the column lines C1-Cq are connected to the column driver 930. The scan and column drivers 920 and 930 are connected to the light emission control unit 910 to operate in response to the control signals CC, CLS, and CS from the light emission control unit 910.

The light emission control unit 910 controls the scan driver 920 and the column driver 930. The light emission control unit 910 receives the input video signals R, G, and B and input control signals for controlling the display of the image from an external graphic controller (not shown).

The light emission control unit 910 processes the input video signals R, G, and B in response to the input control signals so that the input video signals R, G, and B can match with the operational condition of the light emission unit 940, thereby generating the scan driving control signal CS, light emission control signal CC, and light emission signal CLS. The light emission control unit 910 detects gray levels of the light emission pixels EPX using the input video signals R, G, and B, converts the gray levels into digital data, and transmits the digital data to the column driver 930. At this point, the digital data is contained in the light emission signal CLS. The light emission control unit 910 transmits the scan driving control signal CS to the scan driver 920 to control scan signal transmission timing to the scan lines S1-Sp. At this point, the scan signal has a scan-on voltage Von having a voltage level (e.g., a predetermined voltage level) that can emit the electrons from the electron emission regions 24 and a scan-off voltage having a voltage level (e.g., a predetermined voltage level) that disallows the electrons to be emitted from the electron emission regions 24. In order to reduce a peak current that is suddenly generated by a voltage difference between a scan-on voltage Von and light emission data signal voltages on the column lines, the light emission control unit 910 time-divides a period (hereinafter, referred to as "scan-on-time") for which the scan-on voltage is applied into at least two periods and allows the light emission data signals to be transmitted to the light emission pixels EPX connected to a common scan line for the at least two periods corresponding to the scan-on-time.

In a first exemplary embodiment, when the scan-on-time is time-divided into the three periods, the light emission pixels EPX are classified into three groups in response to the three periods, and the timings for transmitting the light emission data to the light emission pixels EPX of the respective groups are set to be different from each other. Then, the peak current of each group is less than the peak current generated by all of the light emission pixels EPX emitting light simultaneously. That is, the amount of the peak current of each group is reduced to 1/3 in response to the number of the time-division.

In order to differently set the timings for transmitting the light emission data signals to the groups, the light emission control unit 910 generates the light emission control signal CC having pulses that correspond to each of the time-division periods and transmits the light emission control signal CC to the column driver 930. The column driver 930 transmits the light emission data signals to the respective groups in response to the pulses of the light emission control signal CC. That is, the column driver 930 transmits sequentially the light emission data signals to the respectively groups during the scan-on-time in response to the light emission control signal CC having at least two pulses. As described above, by sequentially transmitting the light emission data signals using the method of time-dividing the scan-on-time, the suddenly generated peak current can be reduced.

The following will describe a method of reducing the suddenly generated peak current by time-dividing the scan-on-time according to the first exemplary embodiment of the present invention.

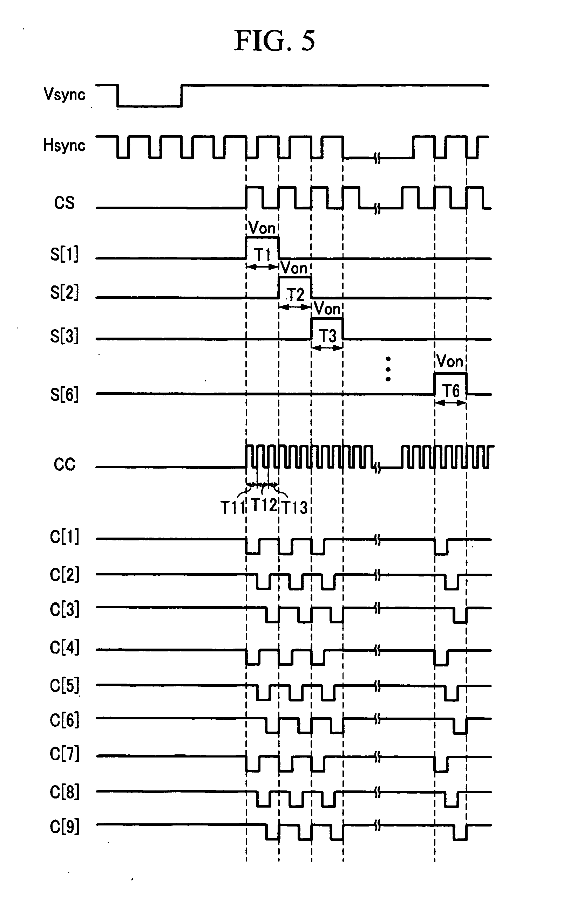

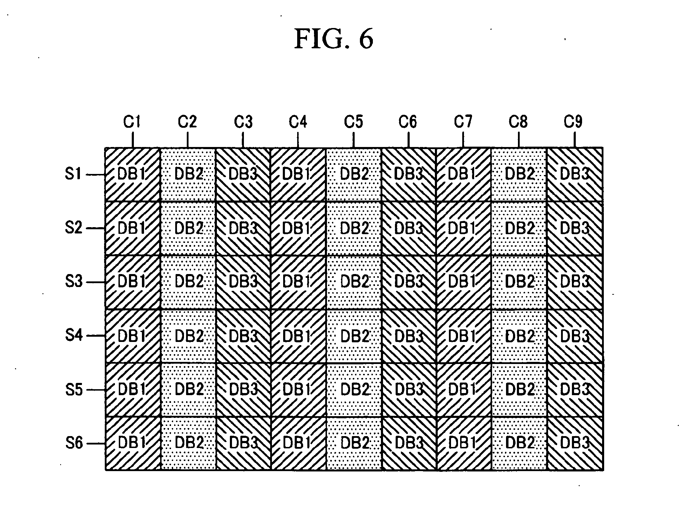

FIG. 5 is a timing diagram illustrating a driving timing of the light emission device of FIG. 4, and FIG. 6 is a schematic view of a portion of the light emission unit 20 of the light emission device of FIG. 4.

In the first exemplary embodiment of the present invention, for the better understanding and ease of description, the scan-on-time of FIG. 5 is time-divided into the three periods and the pulses of the light emission control signal CC, which correspond to the respective periods, are respectively set as first, second, and third light emission control periods T11, T12, and T13 by way of example. Further, in FIG. 6, the portion of the light emission unit 940 (shown in FIG. 4) includes 6 scan lines S1-S6 and 9 column lines C1-C9 by way of example. At this point, the light emission pixels EPX are classified into three groups in accordance with the time-divided scan-on-time. In more detail, when one of the scan lines S1-Sp is applied with the scan-on voltage Von and the light emission data signals are applied to the light emission pixels EPX in response to the light emission control signal CC, the light emission pixels EPX applied with the light emission data signals in accordance with the first light emission control period T11 of the light emission control signal CC will be set as "first light emission group DB1," the light emission pixels EPX applied with the light emission data signals in accordance with the second light emission control period T12 of the light emission control signal CC will be set as "second light emission group DB2," and the light emission pixels EPX applied with the light emission data signals in accordance with the third light emission control period T13 of the light emission control signal CC will be set as "third light emission group DB3."

The light emission control unit 910 sets scan-on-times T1-T6 for which the scan signals S[1]-S[6] having the scan-on voltage Von are applied. Further, the light emission control unit 910 sets the pulses of the light emission control signal CC corresponding to the time-divided scan-on-time as the respective first, second, and third light emission control periods T11, T12, and T13 to control the applying timing of the light emission data signals for the scan-on-times T1-T6.

Then, the scan driver 920 transmits the scan-on voltage Von to one of the scan lines S1-S6 for the scan-on-times, and the column driver 930 transmits the light emission data signals in response to the light emission control signal CC. In more detail, the scan driver 920 transmits the scan-on voltage Von to the scan line S1 for the scan-on-time T1. Then, the column driver 930 transmits the light emission data signals C[1], C[4], and C[7] to the first light emission group DB1 through the respective column lines C1, C4, and C7 for the first light emission control period T11. The column driver 930 transmits the light emission data signals C[2], C[5], and C[8] to the second light emission group DB2 through the respective column lines C2, C5, and C8 for the second light emission control period T12. The column driver 930 transmits the light emission data signals C[3], C[6], and C[9] to the third light emission group DB3 through the respective column lines C3, C6, and C9 for the third light emission control period T13. That is, the light emission data signals are sequentially transmitted to the first, second, and third light emission groups DB1, DB2, and DB3 included in the scan line S1 in response to the light emission control signal CC corresponding to the time-divided scan-on-time for the scan-on-time T1. Then, the level of each of the peak currents that are sequentially generated is reduced to 1/3 in response to the number of the time-division of the scan-on-time. Likewise, the light emission data signals are sequentially transmitted to the first, second, and third light emission groups DB1, DB2, and DB3 connected to each of the scan lines S2-S6 in response to the light emission control signal CC corresponding to the respective time-divided scan-on-times for the respective scan-on-times T2-T6 for which the scan-on voltages are applied to each of the scan lines S2-S6. As a result, the suddenly generated peak current is reduced to 1/3.

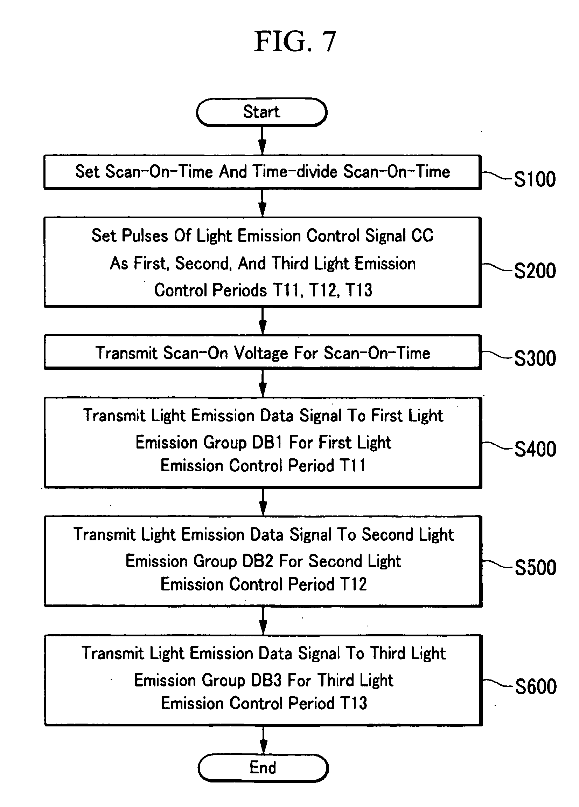

FIG. 7 is a flowchart illustrating a process for reducing a suddenly generated peak current in the light emission device according to the first exemplary embodiment of the present invention.

In reference to the first exemplary embodiment of the present invention, for the better understanding and ease of description, a method for reducing the peak current using the light emission pixels EPX that are connected to the scan line S1 will be described, by way of example, in reference to FIGs. 4 and 5.

The light emission control unit 910 (shown in FIG. 4) performs the time-division of the scan-on-time T1 for which the scan-on voltage Von is applied to the scan line S1 (S100). Further, in order to control the applying timing of the light emission data signals for the scan-on-time T1, the light emission control unit 910 sets the pulses of the light emission control signal CC, which correspond to the time-divided scan-on-times, as the first, second, and third light emission control periods T11, T12, and T13 (S200).

The scan driver 920 transmits the scan-on voltage Von to the scan line S1 for the scan-on-time T1 (S300). The column driver 930 transmits the light emission data signals to the light emission pixels EPX of the first light emission group DB1 connected to the scan line S1 for the first light emission control period T11 of the light emission control signal CC (S400). The column driver 930 transmits the light emission data signals to the light emission pixels EPX of the second light emission group DB2 connected to the scan line S1 for the second light emission control period T12 of the light emission control signal CC (S500). The column driver 930 transmits the light emission data signals to the light emission pixels EPX of the third light emission group DB3 connected to the scan line S1 for the third light emission control period T13 of the light emission control signal CC (S600).

The following will describe a method for reducing the suddenly generated peak current by time-dividing the scan-on-time according to a second exemplary embodiment of the present invention.

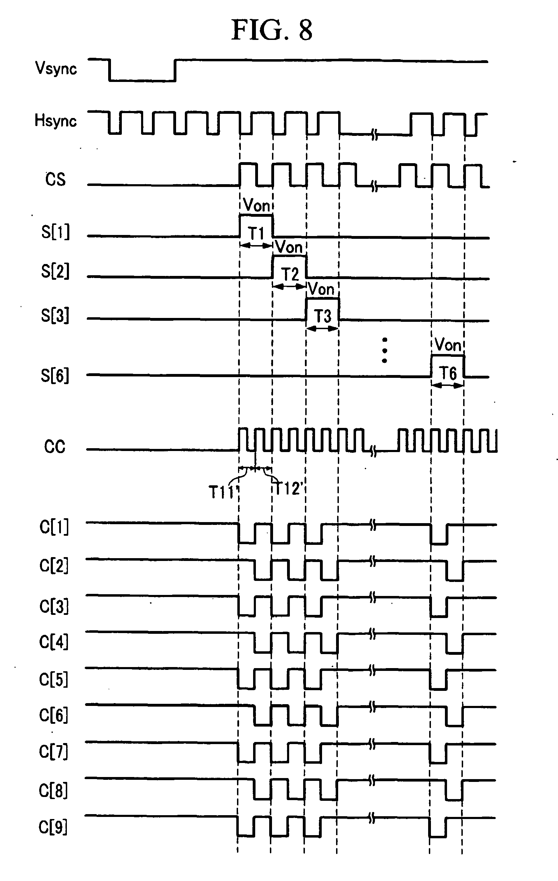

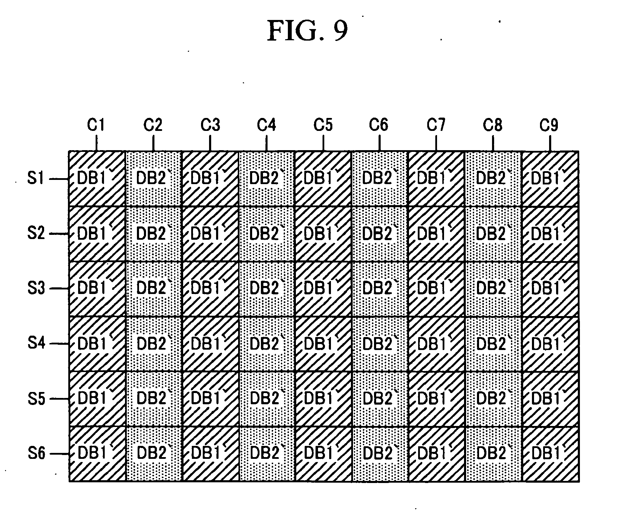

FIG. 8 is a diagram of a driving timing of a light emission device according to the second exemplary embodiment of the present invention, and FIG. 9 is a schematic view of a portion of a light emission unit 940 (shown in FIG. 4) of the light emission device according to the second exemplary embodiment of the present invention.

In the second exemplary embodiment of the present invention, the scan-on-time is time-divided into two periods, and the pulses of the light emission control signal CC, which correspond to the respective periods, are respectively referred as first and second light emission control periods T11' and T12'. Further, the light emission pixels EPX are classified into first and second groups DB1' and DB2' (shown in FIG. 9) in response to the time-division of the scan-on-time. Except for the above, the second exemplary embodiment can reduce the peak current using a method similar to that of the first embodiment. In the first and second exemplary embodiments, like reference numerals denote like parts.

In the second exemplary embodiment of the present invention, for better understanding and ease of description, the scan-on-time of FIG. 8 is time-divided into the two periods, and the pulses of the light emission control signal CC, which correspond to the respective periods, are respectively set as first and second emission control periods T11' and T12' by way of example. Further, in FIG. 9, the light emission unit 940 includes 6 scan lines S1-S6 and 9 column lines C1-C9 by way of example. At this point, the light emission pixels EPX are classified into two groups in accordance with the time-divided scan-on-time (shown in FIG. 8). In more detail, when one of the scan lines S1-Sp is applied with the scan-on voltage Von and the light emission data signals are applied to the light emission pixels EPX in response to the light emission control signal CC, the light emission pixels EPX applied with the light emission data signals in accordance with the first light emission control period T11' of the light emission control signal CC will be set as "first light emission group DB1'," and the light emission pixels EPX applied with the light emission data signals in accordance with the second light emission control period T12' of the light emission control signal CC will be set as "second light emission group DB2'."

The light emission control unit 910 (shown in FIG. 4) sets scan-on-times T1-T6 for which the scan signals S[1]-S[6] having the scan-on voltage Von are applied. Further, the light emission control unit 910 sets the pulses of the light emission control signal CC corresponding to the time-divided scan-on-time as the respective first and second emission control periods T11' and T12' to control the applying timing of the light emission data signals for the scan-on-times T1-T6.

Then, the scan driver 920 (shown in FIG. 4) transmits the scan-on voltage Von to one of the scan lines S1-S6 for the scan-on-time and the column driver 930 (shown in FIG. 4) transmits the light emission data signals in response to the light emission control signal CC. In more detail, the scan driver 920 transmits the scan-on voltage Von to the scan line S1 for the scan-on-time T1. Then, the column driver 930 transmits the light emission data signals C[1], C[3], C[5], C[7], and C[9] to the first light emission group DB1' through the respective column lines C1, C3, C5, C7, and C9 for the first light emission control period T11'. Then, the column driver 930 transmits the light emission data signals C[2], C[4], C[6], and C[8] to the second light emission group DB2' through the respective column lines C2, C4, C6, and C8 for the second light emission control period T12'. That is, the light emission data signals are sequentially transmitted to the first and second light emission groups DB1' and DB2' included in the scan line S1 in response to the light emission control signal CC corresponding to the time-divided scan-on-time for the scan-on-time T1. Then, a level of each of the peak currents that are sequentially generated is reduced to 1/2 in response to the number of the time-division of the scan-on-time. Likewise, the light emission data signals are sequentially transmitted to the first and second light emission groups DB1' and DB2' connected to each of the scan lines S2-S6 in response to the light emission control signal CC corresponding to the respective time-divided scan-on-times for the respective scan-on-times T2-T6 for which the scan-on voltages are applied to each of the scan lines S2-S6. As a result, the suddenly generated peak current is reduced to 1/2.

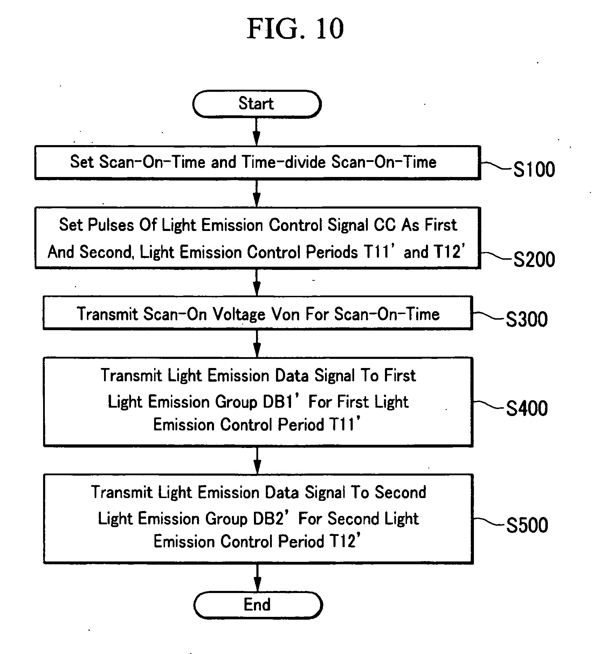

FIG. 10 is a flowchart illustrating a process for reducing a suddenly generated peak current in the light emission device according to the second exemplary embodiment of the present invention.

In the second exemplary embodiment of the present invention, for the better understanding and ease of description, a method for reducing the peak current using the light emission pixels EPX that are connected to the scan line S1 will be described by way of example.

The light emission control unit 910 (shown in FIG. 4) performs the time-division to set the scan-on-time T1 for which the scan-on voltage Von is applied to the scan line S1 (S100). Further, in order to control the applying timing of the light emission data signals for the scan-on-time T1 the light emission control unit 910 sets the pulses of the light emission control signal CC, which correspond to the time-divided scan-on-time, as the first and second emission control periods T11' and T12' (S200).

The scan driver 920 (shown in FIG. 4) transmits the scan-on voltage Von to the scan line S1 for the scan-on-time T1 (S300). The column driver 930 (shown in FIG. 4) transmits the light emission data signals to the light emission pixels EPX of the first light emission group DB1' connected to the scan line S1 for the first light emission control period T11' of the light emission control signal CC (S400). The column driver 930 transmits the light emission data signals to the light emission pixels EPX of the second light emission group DB2' connected to the scan line S1 for the second light emission control period T12' of the light emission control signal CC (S500).

In the first and second exemplary embodiments, for better understanding and ease of description, the number of the time-division is 2 and 3 respectively, but the present invention is not limited to these embodiments. The number of the time-division may be varied by the user.

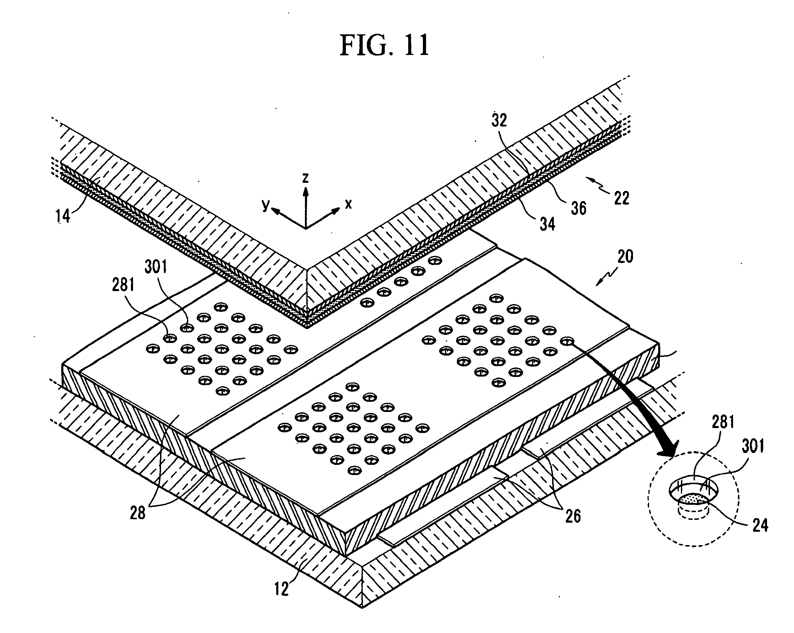

FIG. 11 is a partial exploded perspective view illustrating an active area of a light emission device according to a further exemplary embodiment of the present invention.

Referring to FIG. 11, in a light emission device that is used as a light source, an electron emission unit 20 includes cathode electrodes 26, gate electrodes 28, and electron emission regions 24 that are electrically connected to the cathode electrodes 26. The light emission unit 22 includes an anode electrode 32, a phosphor layer 34 for emitting white light, and a metal reflective layer 36 covering the phosphor layer 34.

The phosphor layer 34 may be formed of a phosphor material that is a mixture of red, green, and blue phosphors. The phosphor layer 34 may be formed on an entire active area of the second substrate 14.

In the light emission device for the light source, the first and second substrates 12 and 14 are spaced apart from each other by about 5-20mm that is relatively long. As the gap between the first and second substrates 12 and 14 increases, a relatively high voltage of more than 10kV, preferably, 10-15kV can be applied to the anode electrode 32. The light emission device structured as described above can realize a maximum luminance of about 10,000cd/m².

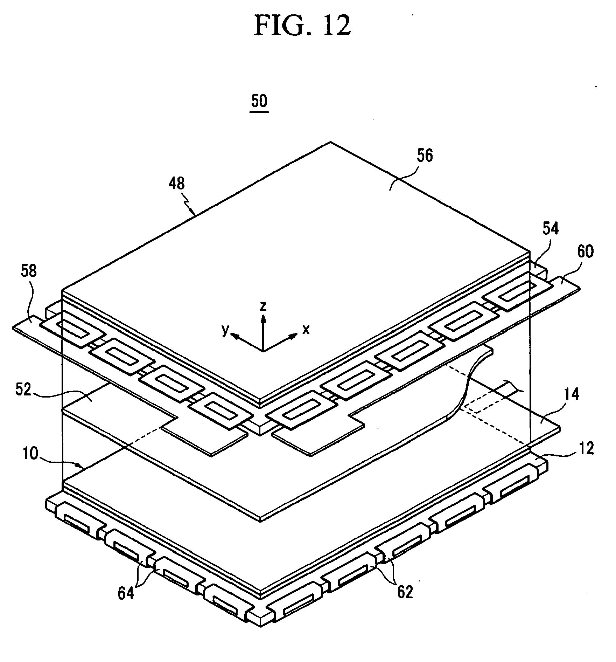

FIG. 12 is an exploded perspective view of a display 50 employing the light emission device of FIG. 11 according to a further embodiment of the present invention.

Referring to FIG. 12, the display 50 of this exemplary embodiment of the present invention includes a light emission device 10 and a display panel 48 located in front of the light emission device 10. In another embodiment, a diffuser plate 52 may be located between the light emission device 10 and the display panel 48 to evenly diffuse the light emitted from the light emission device 10. The diffuser plate 52 is spaced apart from the light emission device 10.

The display panel 48 may be a liquid crystal panel or other passive type display panels. The following will describe an embodiment in which the display panel 48 is the liquid crystal panel by way of example.

The display panel 48 includes a lower substrate 54 on which a plurality of thin film transistors (TFTs) are formed, an upper substrate 56 on which a color filter is formed, and a liquid crystal layer (not shown) disposed between the lower and upper substrates 54 and 56. Diffuser plates (not shown) are adhered to a top surface of the upper substrate 56 and a bottom surface of the lower substrate 54 to polarize the light passing through the display panel 48.

Transparent pixel electrodes that are controlled by the TFTs for respective subpixels are located on an inner surface of the lower substrate 54, and a color filter and a transparent common electrode are located on an inner surface of the upper substrate 56. The color filter layer having red, green, and blue filter layers arranged to correspond to the red, green, and blue subpixels.

When the TFT of one specific subpixel is turned on, an electric filed is formed between the pixel electrode and the common electrode, and twisting angles of the liquid crystal molecules are varied by the electric field. Thus, the light transmission through the subpixel varies in accordance with the varied twisting angle. The display panel 48 can control the luminance and light emission color of each pixel through the above-described process.

In FIG. 12, the reference numeral 58 indicates a gate circuit board assembly transmitting a gate driving signal to the gate electrodes 28 of each TFT, and the reference numeral 60 indicates a data circuit board assembly transmitting a data driving signal to the source electrode of each TFT.

The number of the pixels of the light emission device 10 is less than the number of the pixels of the display panel 48 so that one pixel of the light emission device 10 corresponds to two or more pixels of the display panel 48. Each of the pixels of the light emission device 10 emits light in response to the highest one of the gray levels of the corresponding pixels of the display panel 48. Each of the pixels of the light emission device 10 may represent a grayscale of 2-8 bits.

For convenience, the pixels of the display panel 48 will be referred to as "first pixels" and the pixels of the light emission device 10 will be referred to as "second pixels." The first pixels corresponding to one second pixel will be referred to as "first pixel group."

A driving process of the light emission device 10 may include (a) detecting the highest one of the gray levels of the first pixels of the first pixel group using a signal control unit (not shown) controlling the display panel 48, (b) calculating a gray level required for exciting the second pixels according to the detected highest gray level and converting the calculated gray level into digital data, (c) generating a driving signal of the light emission device 10 using the digital data, and (d) applying the generated driving signal to the light emission device 10.

Scan and data circuit board assemblies (not shown) for driving the light emission device 10 may be disposed on a rear surface of the light emission device 10. In FIG. 12, the reference numeral 62 indicates a connecting member for connecting the cathode electrodes 26 (shown in FIG. 1) to the data circuit board assembly and the reference numeral 64 denotes a connecting member for connecting the gate electrodes 28 (shown in FIG. 1) to the scan circuit board assembly.

As described above, the second pixels of the light emission device 10 emit light with gray levels (e.g., predetermined gray levels) by synchronizing with the corresponding first pixel group when the corresponding first pixel group displays an image. That is, the light emission device 10 emits light having high luminance to a bright portion of the image displayed by the display panel 48 and emits light having low luminance to a dark portion of the image. Accordingly, the display 50 can provide the improved dynamic contrast and image quality.

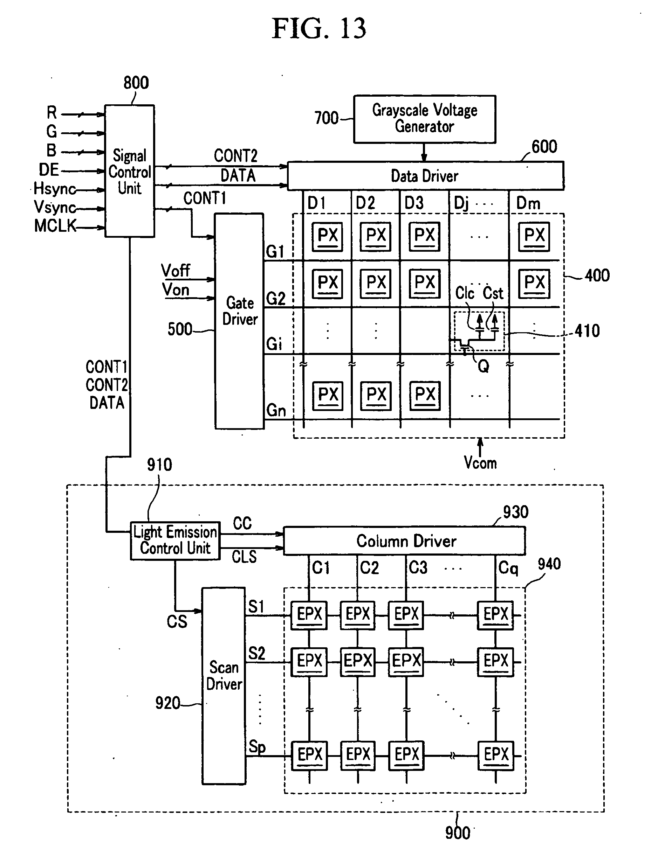

The following describes the display 50 and a method of driving the display 50 with reference to FIG. 13.

FIG. 13 is a block diagram of the display of FIG. 12. The display 50 of this exemplary embodiment of the present invention is a passive type device and includes a liquid crystal panel assembly 400. However, the present invention is not limited thereto.

As shown in FIG. 13, the display 50 of this exemplary embodiment of the present invention includes a liquid crystal panel assembly 400, gate and data drivers 500 and 600 connected to the liquid panel assembly 400, a grayscale voltage generator 700 connected to the data driver 600, and a signal control unit 800 for controlling the light emission device 900.

In one embodiment, the liquid crystal panel assembly 400 includes a plurality of signal lines, and a plurality of pixels PX arranged in a matrix pattern and connected to the signal lines. The signal lines include a plurality of gate signal lines G1-Gn transmitting a gate signal (scan signal) and a plurality of data lines D1-Dm transmitting a data signal.

Each pixel PX, for example, a pixel 410 connected to iₜₕ (i=1, 2,...n) gate line Gi and jₜₕ (j=1,2,...m) data line Dj, includes a switch Q connected to the signal lines Gi and Dj liquid crystal capacitor Clc, and sustain capacitor Cst that are connected to the switch Q. In another embodiment, the sustain capacitor Cst may be omitted if necessary.

The switch Q is a 3-terminal device such as TFT provided on the lower substrate (not shown). That is, the switch Q includes a control terminal connected to the gate line Gi, an input terminal connected to the data line Dj, and an output terminal connected to the liquid crystal capacitor Clc and sustain capacitor Cst.

The gate driver 500 is connected to the gate lines G1-Gn to apply a gate signal that is a combination of a gate-on voltage Von and a gate-off voltage Voff to the gate lines G1-Gn.

The data driver 600 is connected to the liquid crystal panel assembly 400 and the data lines D1-Dm. The data driver 600 selects a grayscale voltage from the grayscale voltage generator 700 and applies the same to the data lines D1-Dm as the data signal. However, when the grayscale voltage generator 700 is not designed to provide all of the voltages for all the gray levels but only some of the voltages for all the gray levels, the data driver 600 divides a reference grayscale voltage, generates grayscale voltages for all the gray levels, and selects the data signal from the generated grayscale voltages.

The grayscale voltage generator 700 generates two sets of grayscale voltage groups (or reference grayscale voltage groups) related to the light transmission of the pixels PX. One of the two sets has a positive value with respect to the common voltage Vcom and the other has a negative value.

The signal control unit 800 controls the gate driver 500, the data driver 600, and the light emission control unit 910. The signal control unit 800 receives video signals R, G, and B from the external graphic controller (not shown) and input control signals for controlling the display 50.

The input video signals R, G, and B have luminance information of the pixels PX. The luminance has a number of gray levels that can be predetermined, for example, 1024(=2¹⁰), 256(=2⁸) or 64(=2⁶). The input control signals include, for example, a vertical synchronization signal Vsync, a horizontal synchronization signal Hsync, a main clock MCLK, and a data enable signal DE.

The signal control unit 800 processes the input video signals R, G, and B based on the input control signals, generates the gate control signal CONT1 and the data control signal CONT2, outputs a gate control signal CONT1 to the gate driver 500, and outputs processed video signal DATA and data control signal CONT2 to the data driver 600. In addition, the signal control unit 800 transmits the gate control signal CONT1, data control signal CONT2, and the processed video signal DATA to the light emission control unit 910.

In this exemplary embodiment of the present invention, the light emission device 900 for the light source (hereinafter, referred to as "light emission device") includes the light emission control unit 910, the scan driver 920, the column driver 930, and the light emission unit 940.

As shown in FIG. 8, the scan lines S1-Sp function as the gate electrodes 28 of the light emission pixels EPX, and the column lines C1-Cq function as the cathode electrodes 26 of the light emission pixels EPX. The column lines C1-Cq are connected to the electron emission regions 24.

The scan driver 920 is connected to the scan lines S1-Sp to transmit the scan signals so that the light emission pixels EPX can emit light by synchronizing with the corresponding pixels EX in accordance with the scan driving control signal CS, the scan voltage control signal CVS (not shown), and the on-time control signal OTS (not shown).

The column driver 930 is connected to the column lines C1-Cq to control the column lines C1-Cq so that the light emission pixels EPX can emit light in response to the gray levels of the corresponding pixels PX in accordance with the light emission control signal CC and the light emission signal CLS. In more detail, the column driver 930 generates the light emission data signals in response to the light emission signal CLS and transmits the generated light emission data signals to the column lines C1-Cq in accordance with the light emission control signal CC. That is, the column driver 930 synchronizes one light emission pixel EPX so that the light emission pixel EPX can emit light with a gray level (e.g., a predetermined gray level) in response to the image displayed by the corresponding pixels EX. In this exemplary embodiment of the present invention, the light emission data signals have voltage levels corresponding to gray levels that are set in response to the image that is being displayed.

The light emission unit 940 includes the scan lines S1-Sp for transmitting the scan signal, the column lines C1-Cq for transmitting the light emission data signals, and the light emission pixels EPX. The light emission pixels EPX are located at respective crossing regions of the scan lines S1-Sp and the column lines C1-Cq. The scan lines S1-Sp are connected to the scan driver 920, and the column lines C1-Cq are connected to the column driver 930. Further, the scan driver 920 and the column driver 930 are connected to the light emission control unit 910 to operate in response to the signals from the light emission control unit 910.

The light emission control unit 910 receives the gate control signal CONT1, the data control signal CONT2, and the processed video signal DATA from the signal control unit 800. Then, the light emission control unit 910 detects highest one of the gray levels of the pixels PX corresponding to one light emission pixel EPX of the light emission device 900 using the video signal DATA and determines the gray level of the light emission pixel EPX in response to the detected highest gray level. The light emission control unit 910 converts the gray level into digital data and transmits the digital data to the column driver 930. At this point, the digital data is included in the light emission signal CLS. Further, the light emission control unit 910 generates the scan driving control signal CS for controlling the transmission timing of the scan signal to the scan lines S1-Sp using the gate control signal CONT1 and transmits the generated scan driving control signal CS to the scan driver 920. At this point, the scan signal has a scan-on voltage Von at a voltage level (e.g., a predetermined voltage level) that can emit electrons from the electron emission regions 24 (shown in FIG. 11) and a scan-off voltage at a voltage level (e.g., a predetermined voltage level) that disallows electrons to be emitted from the electron emission regions 24.

In this exemplary embodiment of the present invention, in order to reduce a peak current that is suddenly generated by a voltage difference between a scan-on voltage Von and light emission data signal voltages, the light emission control unit 910 time-divides the scan-on-time into at least two periods and allows the light emission data signals to be transmitted to the light emission pixels EPX connected to a common scan line for a period corresponding to the scan-on-time.

In one embodiment, when the scan-on-time is time-divided into the three periods, the light emission pixels EPX are classified into three groups in response to the three periods, and the timings transmitting the light emission data to the light emission pixels EPX of the respective groups are set to be different from each other. Thus, the peak current of each group is less than the peak current generated by all of the light emission pixels simultaneously emitting light. That is, an amount of the peak current of each group is reduced to 1/3 in response to the number of the time-division.

In order to differently set the timings transmitting the light emission data signals to the groups, the light emission control unit 910 generates the light emission control signal CC having pulses that correspond to each of the time-division periods and transmits the light emission control signal CC to the column driver 930. In the present exemplary embodiment of the present invention, the column driver 930 transmits the light data signals to the respective groups in response to the pulses of the light emission control signal CC. That is, the column driver 930 transmits sequentially the light emission data signals to the respective groups for the scan-on-time in response to the light emission control signal CC having at least two pulses. As described above, by sequentially transmitting the light emission data signals using the method of time-dividing the scan-on-time, the suddenly generated peak current can be reduced.

Since a method for reducing the peak current of the present exemplary embodiment is similar to those of the second and third exemplary embodiments, a detailed description of the method will be omitted herein.

According to the light emission devices of the exemplary embodiments of the present invention, the light emission pixels EPX are classified into at least two groups in response to the time-divided scan-on-time and the light emission data signals are sequentially transmitted to the respective groups in response to the light emission control signal CC corresponding to the time-divided scan-on-time. Therefore, the suddenly generated peak current can be reduced.

In the above, although one exemplary embodiment where the display uses the liquid crystal panel assembly is described, the present invention is not limited to this exemplary embodiment. That is, the present invention can be applied to all of passive type displays that can display the image by receiving the light from the light emission device.

According to the present invention, the suddenly generated peak current can be reduced by controlling the transmission timing of the light emission data signals.

## Claims

1. A light emission device comprising:
a substrate (12);
an electron emission unit (20);
a light emitting unit (22);
wherein the electron emission unit (20) comprises a plurality of cathode electrodes (24) and a plurality of gate electrodes (28) crossing each other, and electron emission regions (24) electrically connected to the cathode electrodes (26),
a plurality of scan lines (S1, S2, Sp) connected to corresponding gate electrodes (28) and extending in a first direction on the substrate (12) for transmitting a plurality of scan signals;
a plurality of column lines (C1, C2, C3, Cq) connected to corresponding cathode electrodes (24) and extending in a second direction on the substrate (12) for transmitting a plurality of light emission data signals;
a plurality of light emission pixels (EPX) at crossings of the gate electrodes (28) and cathode electrodes (24), the light emission pixels (EPX) being electrically coupled to the scan lines and the column lines; and
a light emission control unit (910) for generating a light emission control signal,
wherein corresponding pixels of the plurality of light emission pixels (EPX) connected to a common scan line (S1, S2, Sp) of the plurality of scan lines (S1, S2, Sp) are classified into at least two pixel groups (DB1, DB2, DB3, DB1', DB2'),
**characterized in that**
the light emission control unit (910) is configured to divide the scan-on time (T1, T2, T3, T4, T5, T6), for which the scan-on voltage is applied to a plurality of light emission pixels (EPX) through a common scan line (S1, S2, Sp), into at least two periods (T11, T12, T13) and to control a sequential transmission of light emission data signals (C[1], C[4], C[7]; C[2], C[5], C[8] and C[3], C[6], C[9]) to the cathode electrodes (24) through column lines (C1, C4, C7; C2, C5, C8 and C3, C6, C9) corresponding to each of the at least two pixel groups (DB1, DB2, DB3) during the corresponding period (T11; T12 and T13) of the at least two periods (T11, T12, T13).

2. The light emission device of claim 1, wherein the at least two periods are within a period for which the scan signals are transmitted to the scan lines, and the first period is in advance of the second period.

3. The light emission device of claim 1 or two, wherein the light emission control unit (910) is configured to set the pulses of a light emission control signal (CC) corresponding to the at least two periods of the scan-on time.

4. The light emission device of claim 3, further comprising a column driver (930) for generating a plurality of light emission data signals according to the light emission control signal (CC).

5. The light emission device of claim 4, wherein the column driver (930) is configured to transmit each of the plurality of light emission data signals to the corresponding pixel group (DB1, DB2, DB3, DB1', DB2') of the at least two pixel groups by synchronizing with the light emission control signal (CC).

6. The light emission device of one of claims 2-5, wherein the light emission control signal comprises at least two pulses for the period for which the scan signals are transmitted to the scan lines (S1, S2, Sp), and the at least two pulses correspond to the at least two pixel groups (DB1, DB2, DB3, DB1', DB2').

7. A display comprising:
a display panel (48) comprising
a first substrate,
a plurality of gate lines (G1, G2, Gi, Gn) extending in a first direction on the first substrate for transmitting a plurality of gate signals,
a plurality of data lines (D1, D2, D3, Dj, Dm) extending in a second direction on the first substrate for transmitting a plurality of data signals, and
a plurality of display pixels (PX) at crossings of the gate lines (G1, G2, Gi, Gn) and the data lines (D1, D2, D3, Dj, Dm); and
a light emission device according to one of claims 1 through 6,
wherein the light emission device (10, 10') is configured to provide light to the display panel for displaying an image.

8. The display of claim 7, wherein the number of the light emission pixels (EPX) is less than or equal to the number of the display pixels (PX), and the light emission pixels (EPX) are adapted to emit light in response to the gray levels of corresponding display pixels (PX).

9. A method of driving a light emission device according to one of claims 1 through 6, the method comprising:
setting a scan-on-time for which the scan signals are transmitted to a first scan line (S1, S2, Sp) of the plurality of scan lines (S1, S2, Sp);
dividing the scan-on time into at least two periods;
classifying corresponding emission pixels of the light emission pixels connected to the first scan line (S1, S2, Sp) into at least two pixel groups;
transmitting the scan signals to the first scan line (S1, S2, Sp) for the scan-on-time;
sequentially transmitting a light emission data signal to each of the at least two pixel groups (DB1, DB2, DB3, DB1', DB2') for the corresponding time period.

10. The method of claim 9, wherein the light emission control signal comprises at least two pulses for a scan-on time, and the at least two pulses correspond to the at least two pixel groups (DB1, DB2, DB3, DB1', DB2').

## Patentansprüche

1. Eine Lichtemissionsvorrichtung, umfassend:
ein Substrat (12);
eine Elektronenemissionseinheit (20);
eine lichtemittierende Einheit (22);
wobei die Elektronenemissionseinheit (20) eine Vielzahl von Kathodenelektroden (24) und eine Vielzahl von Gateelektroden (28), die sich kreuzen, sowie leitend mit den Kathodenelektroden (26) verbundene Elektronenemissionsgebiete (24) umfasst,
eine Vielzahl von mit entsprechenden Gateelektroden (28) verbundenen und sich in einer ersten Richtung auf dem Substrat (12) erstreckenden Abtastleitungen (S1, S2, Sp) zum Übertragen einer Vielzahl von Abtastsignalen;
eine Vielzahl von mit entsprechenden Kathodenelektroden (24) verbundenen und sich in einer zweiten Richtung auf dem Substrat (12) erstreckenden Spaltenleitungen (C1, C2, C3, Cq) zum Übertragen einer Vielzahl von Lichtemissionsdatensignalen;
eine Vielzahl von Lichtemissionspixeln (EPX) an Kreuzungsstellen der Gateelektroden (28) und Kathodenelektroden (24), wobei die Lichtemissionspixel (EPX) leitend mit den Abtastleitungen und den Spaltenleitungen verbunden sind; und
eine Lichtemissionssteuereinheit (910) zum Generieren eines Lichtemissionssteuersignals,
wobei entsprechende Pixel der Vielzahl von Lichtemissionspixeln (EPX), die mit einer gemeinsamen Abtastleitung (S1, S2, Sp) der Vielzahl von Abtastleitungen (S1, S2, Sp) verbunden sind, in mindestens zwei Pixelgruppen (DB1, DB2, DB3, DB1', DB2') klassifiziert sind,
**dadurch gekennzeichnet, dass**
die Lichtemissionssteuereinheit (910) dazu ausgelegt ist, die Abtast-Ein-Zeit (T1, T2, T3, T4, T5, T6), während derer die Abtast-Ein-Spannung durch eine gemeinsame Abtastleitung (S1, S2, Sp) an eine Vielzahl von Lichtemissionspixeln (EPX) angelegt ist, in mindestens zwei Perioden (T11, T12, T13) zu unterteilen und eine sequenzielle Übertragung von Lichtemissionsdatensignalen (C[1], C[4], C[7]; C[2], C[5], C[8] und C[3], C[6], C[9]) an die Kathodenelektroden (24) durch jeder der mindestens zwei Pixelgruppen (DB1, DB2, DB3) entsprechende Spaltenleitungen (C1, C4, C7; C2, C5, C8 und C3, C6, C9) während der entsprechenden Periode (T11; T12 und T13) der mindestens zwei Perioden (T11, T12, T 13) zu steuern.

2. Die Lichtemissionsvorrichtung nach Anspruch 1, wobei die mindestens zwei Perioden innerhalb einer Periode liegen, während derer die Abtastsignale an die Abtastleitungen übertragen werden, und die erste Periode der zweiten Periode vorangeht.

3. Die Lichtemissionsvorrichtung nach Anspruch 1 oder zwei, wobei die Lichtemissionssteuereinheit (910) dazu ausgelegt ist, die Pulse eines den mindestens zwei Perioden der Abtast-Ein-Zeit entsprechenden Lichtemissionssteuersignals (CC) festzulegen.

4. Die Lichtemissionsvorrichtung nach Anspruch 3, ferner umfassend einen Spaltentreiber (930) zum Generieren einer Vielzahl von Lichtemissionsdatensignalen gemäß dem Lichtemissionssteuersignal (CC).

5. Die Lichtemissionsvorrichtung nach Anspruch 4, wobei der Spaltentreiber (930) dazu ausgelegt ist, durch Synchronisieren mit dem Lichtemissionssteuersignal (CC) jedes der Vielzahl von Lichtemissionsdatensignalen an die entsprechende Pixelgruppe (DB1, DB2, DB3, DB1', DB2') der mindestens zwei Pixelgruppen zu übertragen.

6. Die Lichtemissionsvorrichtung nach einem der Ansprüche 2-5, wobei das Lichtemissionssteuersignal mindestens zwei Pulse für die Periode, während derer die Abtastsignale an die Abtastleitungen (S1, S2, Sp) übertragen werden, umfasst und die mindestens zwei Pulse den mindestens zwei Pixelgruppen (DB1, DB2, DB3, DB1', DB2') entsprechen.

7. Eine Anzeige, umfassend:
eine Anzeigetafel (48), umfassend
ein erstes Substrat,
eine Vielzahl von sich in einer ersten Richtung auf dem ersten Substrat erstreckenden Gateleitungen (G1, G2, Gi, Gn) zum Übertragen einer Vielzahl von Gatesignalen,
eine Vielzahl von sich in einer zweiten Richtung auf dem ersten Substrat erstreckenden Datenleitungen (D1, D2, D3, Dj, Dm) zum Übertragen einer Vielzahl von Datensignalen und
eine Vielzahl von Anzeigepixeln (PX) an Kreuzungsstellen der Gateleitungen (G1, G2, Gi, Gn) und der Datenleitungen (D1, D2, D3, Dj, Dm); und
eine Lichtemissionsvorrichtung gemäß einem der Ansprüche 1 bis 6,
wobei die Lichtemissionsvorrichtung (10, 10') dazu ausgelegt ist, der Anzeigetafel zum Anzeigen eines Bildes Licht bereitzustellen.

8. Die Anzeige nach Anspruch 7, wobei die Anzahl der Lichtemissionspixel (EPX) geringer als die oder gleich der Anzahl der Anzeigepixel (PX) ist und die Lichtemissionspixel (EPX) dazu ausgelegt sind, als Antwort auf die Graustufen entsprechender Anzeigepixel (PX) Licht zu emittieren.

9. Ein Verfahren zum Ansteuern einer Lichtemissionsvorrichtung gemäß einem der Ansprüche 1 bis 6, wobei das Verfahren Folgendes umfasst:
Festlegen einer Abtast-Ein-Zeit, während derer die Abtastsignale an eine erste Abtastleitung (S1, S2, Sp) der Vielzahl von Abtastleitungen (S1, S2, Sp) übertragen werden;
Unterteilen der Abtast-Ein-Zeit in mindestens zwei Perioden;
Klassifizieren entsprechender Emissionspixel der Lichtemissionspixel, die mit der ersten Abtastleitung (S1, S2, Sp) verbunden sind, in mindestens zwei Pixelgruppen;
Übertragen der Abtastsignale an die erste Abtastleitung (S1, S2, Sp) während der Abtast-Ein-Zeit;
sequenzielles Übertragen eines Lichtemissionsdatensignals an jede der mindestens zwei Pixelgruppen (DB1, DB2, DB3, DB1', DB2') während der entsprechenden Zeitperiode.

10. Das Verfahren nach Anspruch 9, wobei das Lichtemissionssteuersignal mindestens zwei Pulse während einer Abtast-Ein-Zeit umfasst und die mindestens zwei Pulse den mindestens zwei Pixelgruppen (DB1, DB2, DB3, DB1', DB2') entsprechen.

## Revendications

1. Dispositif d'émission de lumière comprenant :
un substrat (12) ;
une unité (20) d'émission d'électrons ;
une unité (22) d'émission de lumière ;
dans lequel l'unité (20) d'émission d'électrons comprend une pluralité d'électrodes (24) de cathode et une pluralité d'électrodes (28) de grille se croisant les unes les autres, et des régions (24) d'émission d'électrons connectées électriquement aux électrodes (26) de cathode ;
une pluralité de lignes (S1, S2, Sp) de balayage connectées aux électrodes (28) de grille correspondantes et s'étendant dans une première direction sur le substrat (12) pour transmettre une pluralité de signaux de balayage ;
une pluralité de lignes (C1, C2, C3, Cq) de colonne connectées aux électrodes (24) de cathode correspondantes et s'étendant dans une seconde direction sur le substrat (12) pour transmettre une pluralité de signaux de données d'émission de lumière ;
une pluralité de pixels (EPX) d'émission de lumière aux croisements des électrodes (28) de grille et des électrodes (24) de cathode, les pixels (EPX) d'émission de lumière étant couplés électriquement aux lignes de balayage et aux lignes de colonne ; et
une unité (910) de commande d'émission de lumière destinée à engendrer un signal de commande d'émission de lumière,
dans lequel des pixels correspondants de la pluralité de pixels (EPX) d'émission de lumière connectés à une ligne commune (S1, S2, Sp) de balayage de la pluralité de lignes (S1, S2, Sp) de balayage sont classés en au moins deux groupes (DB1, DB2, DB3, DB1', DB2') de pixels,
**caractérisé en ce que** l'unité (910) de commande d'émission de lumière est constituée pour diviser le temps (T1, T2, T3, T4, T5, T6) de balayage, pendant lequel la tension de balayage est appliquée à une pluralité de pixels (EPX) d'émission de lumière par l'intermédiaire d'une ligne commune (S1, S2, Sp) de balayage, en au moins deux périodes (T11, T12, T13) et pour commander une transmission séquentielle de signaux (C[1], C[4], C[7] ; C[2], C[5], C[8] et C[3], C[6], C[9]) de données d'émission aux électrodes (24) de cathode par l'intermédiaire de lignes (C1, C4, C7 ; C2, C5, C8 et C3, C6, C9) correspondant à chacun des au moins deux groupes (DB1, DB2, DB3) de pixels durant la période (T11, T12 et T13) correspondante des au moins deux périodes (T11, T12, T13).

2. Dispositif d'émission de lumière selon la revendication 1, dans lequel les au moins deux périodes sont à l'intérieur d'une période pendant laquelle les signaux de balayage sont transmis aux lignes de balayage, et dans lequel la première période est en avance de la seconde période.

3. Dispositif d'émission de lumière selon la revendication 1 ou 2, dans lequel l'unité (910) de commande d'émission de lumière est constituée pour fixer les impulsions d'un signal (CC) de commande d'émission de lumière correspondant aux au moins deux périodes du temps de balayage.

4. Dispositif d'émission de lumière selon la revendication 3, comprenant en outre un circuit d'attaque (930) de colonne destiné à engendrer une pluralité de signaux de données d'émission de lumière en fonction du signal (CC) de commande d'émission de lumière.

5. Dispositif d'émission de lumière selon la revendication 4, dans lequel le circuit d'attaque (930) de colonne est constitué pour transmettre chacun de la pluralité de signaux de données d'émission de lumière au groupe (DB1, DB2, DB3, DB1', DB2') de pixels correspondant des au moins deux groupes de pixels par synchronisation avec le signal (CC) de commande d'émission de lumière.

6. Dispositif d'émission de lumière selon l'une des revendications 2 à 5, dans lequel le signal de commande d'émission de lumière comprend au moins deux impulsions pendant la période pendant laquelle les signaux de balayage sont transmis aux lignes (S1, S2, Sp) de balayage, et dans lequel les au moins deux impulsions correspondent aux au moins deux groupes (DB1, DB2, DB3, DB1', DB2') de pixels.

7. Écran comprenant :
un panneau (48) d'affichage, comprenant :
un premier substrat ;
une pluralité de lignes (G1, G2, Gi, Gn) de grille s'étendant dans une première direction sur le premier substrat pour transmettre une pluralité de signaux de grille ;
une pluralité de lignes (D1, D2, D3, Dj, Dm) de donnée s'étendant dans une seconde direction sur le premier substrat pour transmettre une pluralité de signaux de données ; et
une pluralité de pixels (PX) d'affichage aux croisements des lignes (G1, G2, Gi, Gn) de grille et des lignes (D1, D2, D3, Dj, Dm) de données ; et
un dispositif d'émission de lumière selon l'une des revendications 1 à 6,
dans lequel le dispositif (10, 10') d'émission de lumière est constitué pour fournir de la lumière au panneau d'affichage pour afficher une image.

8. Écran selon la revendication 7, dans lequel le nombre des pixels (EPX) d'émission de lumière est inférieur ou égal au nombre des pixels (PX) d'affichage, et dans lequel les pixels (EPX) d'émission de lumière sont aptes à émettre de la lumière en réponse aux niveaux de gris de pixels (PX) d'affichage correspondants.

9. Procédé d'attaque d'un dispositif d'émission de lumière selon l'une des revendications 1 à 6, le procédé comprenant :
la fixation d'un temps de balayage pendant lequel les signaux de balayage sont transmis à une première ligne (S1, S2, Sp) de balayage de la pluralité de lignes (S1, S2, Sp) de balayage ;
la division du temps de balayage en au moins deux périodes ;
la classification des pixels d'émission correspondants des pixels d'émission de lumière connectés à la première ligne (S1, S2, Sp) de balayage en au moins deux groupes de pixels ;
la transmission des signaux de balayage à la première ligne (S1, S2, Sp) de balayage pendant le temps de balayage ;
la transmission séquentielle d'un signal de donnée d'émission de lumière à chacun des au moins deux groupes (DB1, DB2, DB3, DB1', DB2') de pixels pendant la période de temps correspondante.

10. Procédé selon la revendication 9, dans lequel le signal de commande d'émission de lumière comprend au moins deux impulsions pendant un temps de balayage, et dans lequel les au moins deux impulsions correspondent aux au moins deux groupes (DB1, DB2, DB3, DB1', DB2') de pixels.
